# EUROPEAN PATENT APPLICATION

(11) **EP 1 933 262 A1**
(43) Date of publication of application: **18.06.2008**
(21) Application number: 07112755.9
(22) Date of filing: 19.07.2007
(51) Int. Cl.: G06Q 10/00, G06F 17/24

(54) **Information processing apparatus and method**

(30) Priority: 06.12.2006 JP 2006329923
(71) Applicant: CANON KABUSHIKI KAISHA, Ohta-ku Tokyo 146-8501 (JP)
(72) Inventor: Koyano, Hiroki, Tokyo Tokyo 146-8501 (JP)
(74) Representative: TBK-Patent

(57) **Abstract**

An information processing apparatus which manages amendment to overlay-displayed field data includes setting means (201) which sets, for each of the field data, amendment information for defining display of an amendment result to field data of a form file, and display control means (203) which controls displaying of the amendment result to selected field data based on data obtained by editing the selected field data and the amendment information corresponding to the selected field data set by the setting means (201).

## Description

### BACKGROUND OF THE INVENTION

### Field of the Invention

The present invention relates to an information processing technique of managing amendment to overlay-displayed field data.

### Description of the Related Art

Form information used in overlay printing is generally created using a dedicated form design program. The form design program designates a graphic (form graphic) statically displayed at a position designated on a form, and text data (field data) of each page. The form design program has a function of creating a graphic (field graphic) displayed at a position designated on the form in accordance with the settings (output style) of the format and amount of field data.

The created form can be registered in advance using a page registration or form registration function provided by a page printer. Printing of field data over a registered form is called "overlay printing".

In terms of the control within a company, it is necessary to visualize business processes, and uniformly manage modification/amendment to a variety of field data. For example, Japanese Patent Laid-Open No. 9-305353 discloses a technique of displaying a graphic made up of cells within a form in a display color corresponding to changes of data within the cells in order to allow a user to easily confirm the log of modification/amendment to form data.

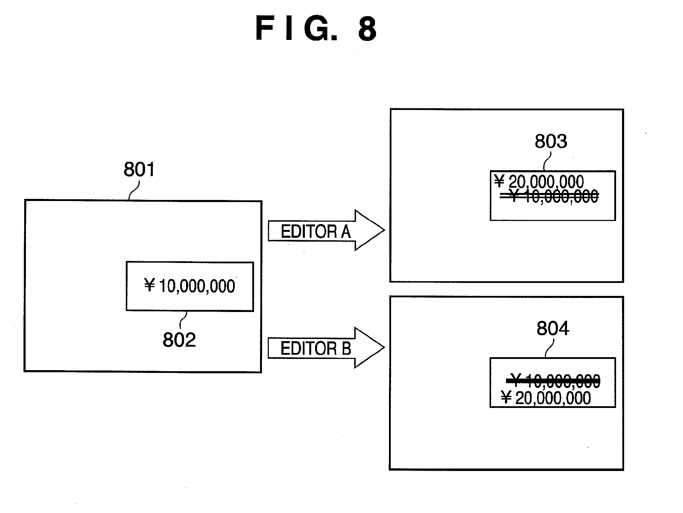

However, how to modify/amend field data varies depending on an editor. For example, Fig. 8 is a view illustrating an example 803 of amendment by editor A and an example 804 of amendment by editor B both to field data representing an amount of money in a form 802. Editor A draws a double strikeout, and describes an amended amount above it. Editor B draws a single, bold strikeout over the amount, and describes an amended amount below it. Amendment based on an editor's experience changes in format even with substantially the same contents. This obstructs unified management of amendment to field data.

### SUMMARY OF THE INVENTION

The present invention provides an information processing technique capable of uniformly managing amendment to overlay-displayed field data.

According to one aspect of the present invention, there is provided an information processing apparatus as specified in claims 1 to 4.

According to another aspect of the present invention, there is provided an information processing method as specified in claims 5 to 8.

The present invention can uniformly manage amendment to overlay-displayed field data.

Further features of the present invention will become apparent from the following description of exemplary embodiments (with reference to the attached drawings).

### BRIEF DESCRIPTION OF THE DRAWINGS

Fig. 1 is a block diagram showing the arrangement of an information processing apparatus in which a form information design program module and overlay printing control program module can run;

Fig. 2 is a block diagram showing the arrangement of program modules in a form information design module 201;

Fig. 3 is a block diagram showing the arrangement of program modules in an overlay printing control module;

Fig. 4 is a view showing the arrangement of program modules in a client/server system on a network;

Figs. 5A and 5B are views each illustrating an amendment information setup window displayed on a display apparatus 101;

Fig. 6 is a table illustrating a setup window for associating amendment information with each field graphic displayed on the display apparatus 101;

Figs. 7A and 7B are views each illustrating a setup window for setting the form file amendment authorization;

Fig. 8 is a view showing an example when the amendment results become nonuniform between editors owing to the difference in amending method;

Fig. 9A is a flowchart for explaining a sequence to create a form file by a form information design module 201;

Fig. 9B is a flowchart for explaining a sequence to set authorization to amend a form file;

Fig. 10 is a flowchart for explaining the sequence of an amendment process by the form information design module 201;

Figs. 11A and 11B are views for explaining the sequence of the amendment process;

Fig. 12 is a flowchart for explaining the sequence of an edit process when a material printed on a print medium is edited;

Fig. 13 is a view for explaining the sequence of the edit process when a material printed on a print medium is edited;

Fig. 14A is a view illustrating a form graphic; and

Fig. 14B is a table showing a setting example of field data.

### DESCRIPTION OF THE EMBODIMENT

A preferred embodiment of the present invention will be exemplarily described in detail below with reference to the accompanying drawings. Building components described in the embodiment are merely examples, and may not be construed to limit the scope of the present invention only to them.

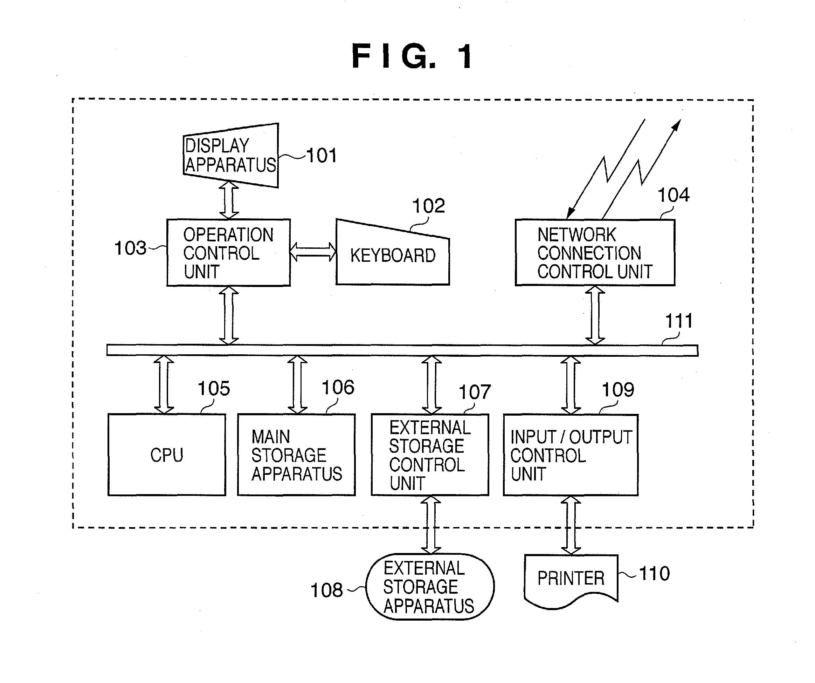

Fig. 1 is a block diagram showing the arrangement of an information processing apparatus in which a form information design program module (to be referred to as a "form information design module" hereinafter) and an overlay printing control program module ("overlay printing control module") can run. In Fig. 1, a CPU 105 controls the information processing apparatus in accordance with a control program stored in a main storage apparatus 106.

The main storage apparatus 106 is a memory area where an application program loaded from an external storage apparatus 108 via an external storage control unit 107 is stored and executed by the CPU 105. The main storage apparatus 106 also stores, in this area, various application programs such as the form information design module, the overlay printing control module, and a page data generation program to generate page data. The form information design module and overlay printing control module will be described later.

Control programs and various application programs stored in the main storage apparatus 106 can run in accordance with an instruction from an operation apparatus comprising a display apparatus 101, keyboard 102, and operation control unit 103. Control programs and various application programs can also run based on instruction information input from an external information processing apparatus connected via a network such as a LAN or WAN under the control of a network connection control unit 104. Under the control of the network connection control unit 104, the information processing apparatus can also transmit, to an external information processing apparatus, the operation result of a control program or the like based on instruction information input from the external information processing apparatus. The information processing apparatus can also build a client/server system on the network.

A printer 110 is connected to the information processing apparatus via an input/output control unit 109. The printer 110 can register, in a memory in advance, form pattern-containing form information input from the information processing apparatus. The printer 110 can generate an overlay pattern by overlaying text data input from the information processing apparatus on a form pattern, and execute overlay printing.

A system bus 111 is used to, for example, transfer data and program instructions between the operation control unit 103, the CPU 105, the main storage apparatus 106, the external storage control unit 107, the input/output control unit 109, and the like.

### (Form Information Design Module)

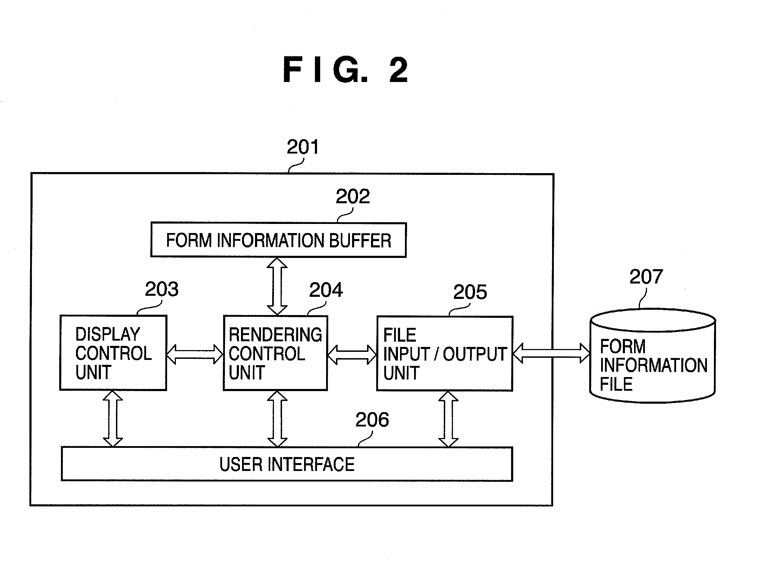

Fig. 2 is a block diagram showing the arrangement of program modules in a form information design module 201. In execution, the form information design module 201 is stored in the main storage apparatus 106 and is ready to run. Under the overall control of the CPU 105, a user interface 206 controls a form information buffer 202 and display control unit 203. The user interface 206 also controls a rendering control unit 204 and file input/output unit 205.

The display control unit 203 can receive via the rendering control unit 204 a form pattern stored in the form information buffer 202, and display it on the display apparatus 101. Form patterns stored in the form information buffer 202 include, for example, a form pattern based on form information being edited, and a form pattern read out from a form information file 207.

Under the overall control of the CPU 105, the display control unit 203 can accept various instructions such as a user setting instruction and form information creation instruction input using the keyboard 102, a pointing device (not shown), or the like.

Under the overall control of the CPU 105, the user interface 206 analyzes various instructions received by the display control unit 203, and issues process requests as internal instructions to the rendering control unit 204 and file input/output unit 205 based on the analysis result.

The rendering control unit 204 can manage the form information buffer 202, and store a form pattern based on created form information in the form information buffer 202. The rendering control unit 204 can read out a form pattern stored in the form information buffer 202, and transfer it to the display control unit 203 and file input/output unit 205 in accordance with a request from the user interface 206. The display control unit 203 can display a form pattern transferred from the rendering control unit 204 on the display apparatus 101. The file input/output unit 205 can write a form pattern transferred from the rendering control unit 204 in the form information file 207.

The file input/output unit 205 can write a form pattern from the form information buffer 202 in the form information file 207 stored in the external storage apparatus 108, or read out a form pattern from the form information file 207 based on an instruction from the user interface 206. Under the overall control of the CPU 105, the user interface 206 can receive process results from the rendering control unit 204 and file input/output unit 205, and input them to the display control unit 203. The display control unit 203 can also display process results on the display apparatus 101 on the basis of process results received from the user interface 206.

### (Overlay Printing Control Module)

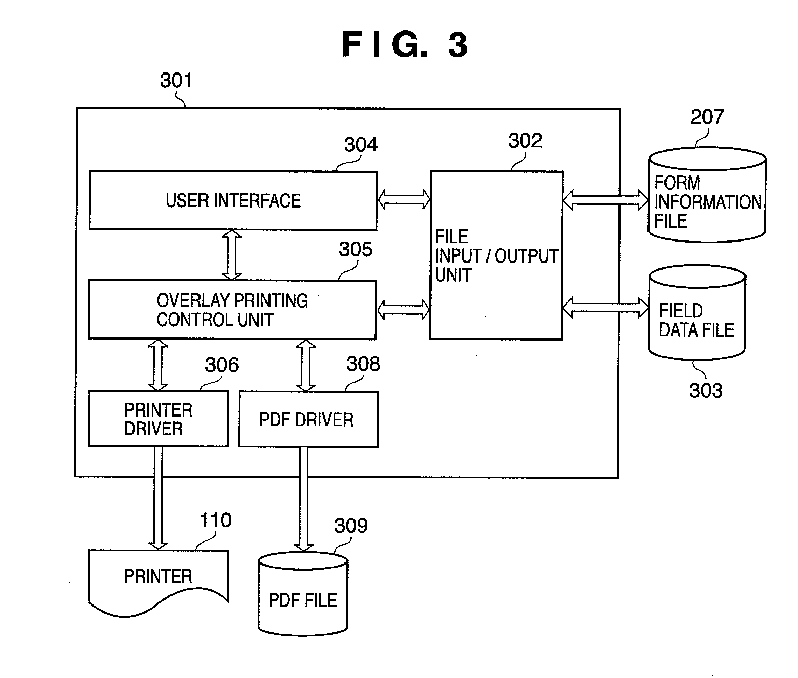

Fig. 3 is a block diagram showing the arrangement of program modules in the overlay printing control module. In execution, an overlay printing control module 301 is stored in the main storage apparatus 106 and is ready to run.

Under the overall control of the CPU 105, an overlay printing control unit 305 controls a file input/output unit 302. The overlay printing control unit 305 also controls a user interface 304 and printer driver 306. Further, the overlay printing control unit 305 controls a PDF driver 308 (PDF file generation program).

The user interface 304 receives, via the file input/output unit 302, a form information file name and field data file name from the form information file 207 and a field data file 303 which are stored in the external storage apparatus 108. The display apparatus 101 displays a list of form information file names and field data file names received by the user interface 304.

The user interface 304 accepts instruction information such as a form information file name and field data file name designated by a user using the keyboard 102 or the like, and outputs the instruction information to the file input/output unit 302.

The file input/output unit 302 reads out form information from the form information file 207 and field data from the field data file 303 based on input instruction information, and outputs them to the overlay printing control unit 305.

The overlay printing control unit 305 can output form information input via the file input/output unit 302 to the printer 110 via the printer driver 306, and register a form pattern based on the form information.

The overlay printing control unit 305 interprets input text field data to generate intermediate data (data so processed as to easily generate bitmap data by the printer driver 306). The overlay printing control unit 305 outputs the intermediate data to the printer driver 306.

As a form of an overlay printing process, intermediate data can also be output as a PDF file 309. In this case, the overlay printing control unit 305 outputs intermediate data which allows the PDF driver 308 to interpret form information and text field data input via the file input/output unit 302. The PDF driver 308 generates the PDF file 309 from the intermediate data.

### (Configuration of Client/server System on Network)

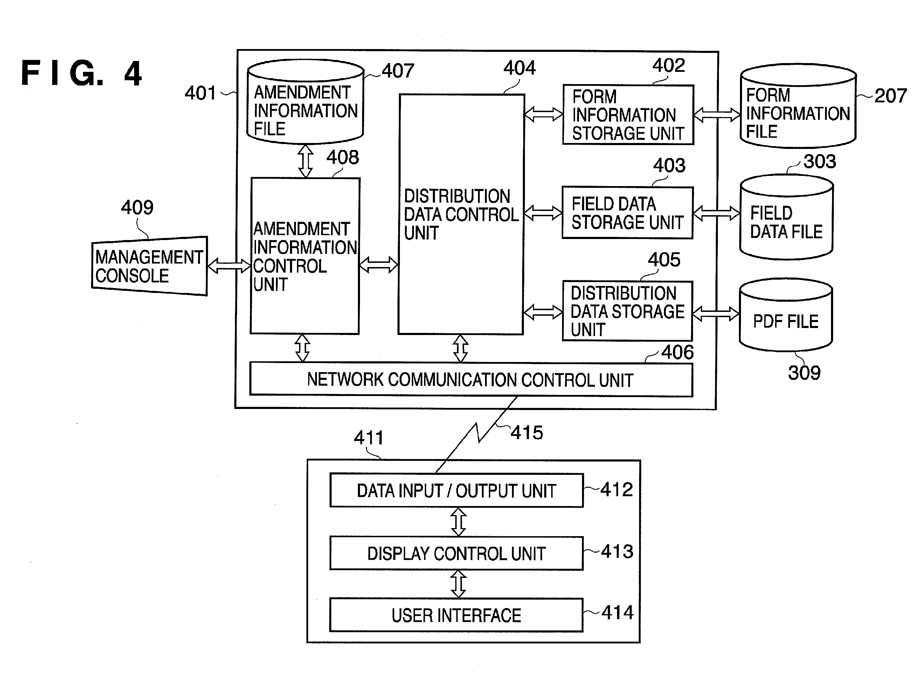

Fig. 4 is a view showing the arrangement of program modules in a client/server system on a network. In Fig. 4, an information processing apparatus 401 serves as a Web server (to be referred to as a "Web server 401" hereinafter). The Web server 401 has the hardware configuration shown in Fig. 1. An information processing apparatus 411 serves as a Web client (to be referred to as a "Web client 411" hereinafter) which instructs the Web server 401 on the overlay printing process and inputs/outputs data.

When the form designer inputs an overlay printing request to a user interface 414 in the Web client 411, the overlay printing request is transmitted to the Web server 401 via a display control unit 413 and data input/output unit 412.

A network communication control unit 406 in the Web server 401 connected via a network 415 receives the overlay printing request, and then transfers it to a distribution data control unit 404.

The distribution data control unit 404 analyzes form information and field data necessary for overlay printing in response to the received overlay printing request. A form information storage unit 402 temporarily stores form pattern-containing form information read out from the form information file 207 based on the analysis result. A field data storage unit 403 temporarily stores field data read out from the field data file 303 based on the analysis result by the distribution data control unit 404.

The distribution data control unit 404 performs a process for overlay printing based on the form information stored in the form information storage unit 402 and the field data stored in the field data storage unit 403. A distribution data storage unit 405 temporarily stores the process result for overlay printing. Data stored in the distribution data storage unit 405 mainly has the PDF format, and is finally saved in the PDF file 309. The distribution data control unit 404 asynchronously transmits the PDF data stored in the distribution data storage unit 405 to the Web client 411 via the network communication control unit 406. In the Web client 411, the data input/output unit 412 receives the PDF data transmitted from the Web server 401 via the network 415. The display control unit 413 displays the received data on a Web browser or the like on the display apparatus.

### (Creation of Form File)

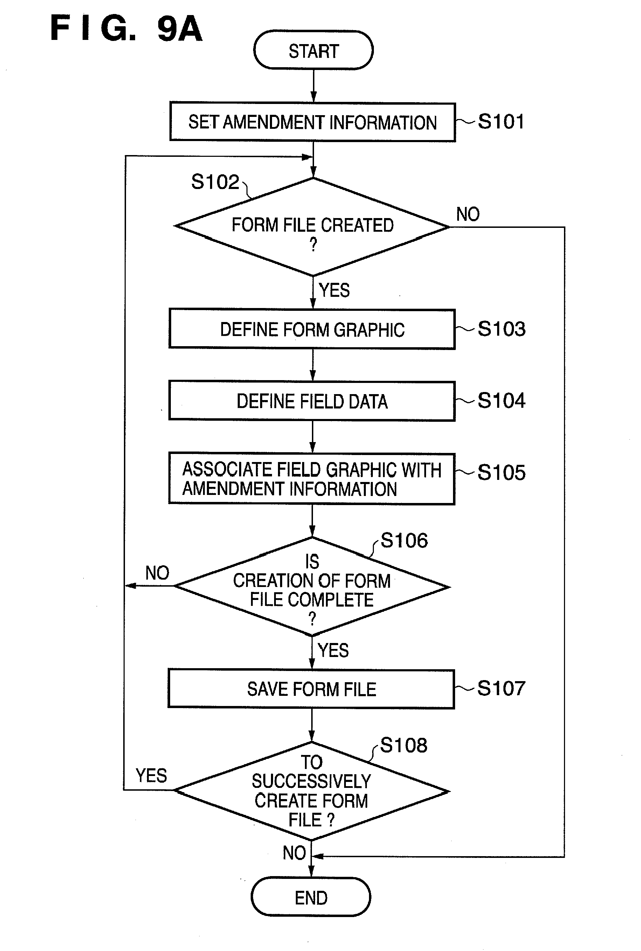

A sequence to create a form file by the form information design module 201 will be explained with reference to a flowchart in Fig. 9A. The display control unit 203 and user interface 206 execute this process under the overall control of the CPU 105. The process starts when the display control unit 203 receives a form file creation instruction from the display apparatus 101.

In step S101, edit (amendment) information is set to define the display of an edit result in order to uniformly manage the contents of editing (amendment) upon editing (amending) field data of a field graphic. The amendment information contains, for example, an amendment type (selection of a line type, designation of a fill, and the like), a method of displaying amended data, an amended data display position, addition of an imprint to amendment, and information on an amendment-permitted user. The amendment information is merely an example, and the gist of the present invention is not limited to the above-described contents.

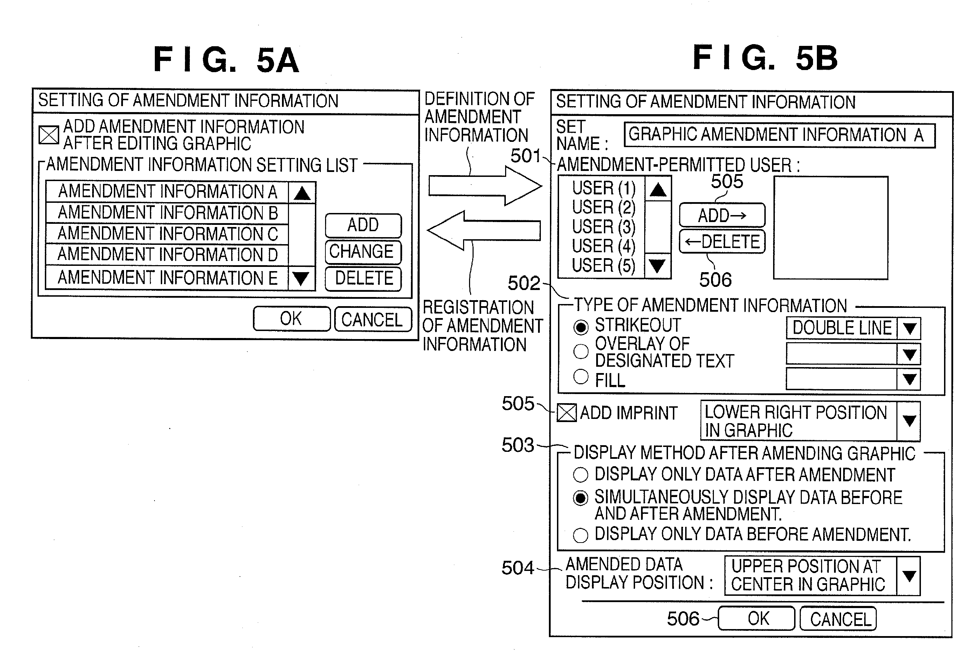

Figs. 5A and 5B are views each illustrating an amendment information setup window displayed on the display apparatus 101. Amendment information can be defined for each field graphic in a form pattern (Fig. 5A). A setup window (Fig. 5B) for defining amendment information includes an amendment-permitted user setting field 501, a setting field 502 for setting an amendment type such as the line type of a strikeout and a fill, and a display method setting field 503 for setting how to display amended data. The setup window (Fig. 5B) also includes a setting field 504 for setting a display position where amended data is displayed with respect to data before amendment.

A user designated in the user setting field 501 is given authorization to amend (edit) field data. In the amendment type setting field 502, it is set to display a strikeout by a "double line" as an example of the line type. The setting in the amendment type setting field 502 allows designation of various line types such as a bold line, broken line, and chain line. In the display method setting field 503, it is set to "simultaneously display data before and after amendment". By selecting a radio button, it can be set to "display only data after amendment" or "display only data before amendment". In the setting field 504 for designating a display position, it is set to display amended data at an "upper position at the center in a graphic" as an example of the display position. The setting in the setting field 504 allows designation of a position where amended data is laid out and displayed with respect to data before amendment.

The setting in an imprint setting field 505 allows designation of whether to add an imprint to amended data, and a position where an imprint is added (the position is set to a lower right position in a graphic in the example of Fig. 5B). By pressing an OK button 506, the contents of amendment information are finalized to register the amendment information.

Referring back to step S101 in Fig. 9A, after setting of amendment information ends, the process advances to step S102.

In step S102, the CPU 105 determines whether an instruction input by the form designer via the display control unit 203 is a form file creation instruction.

If the CPU 105 determines in step S102 that the instruction is not a form file creation instruction (NO in S102), the process ends. If the CPU 105 determines in step S102 that the instruction is a form file creation instruction (YES in S102), the process advances to step S103.

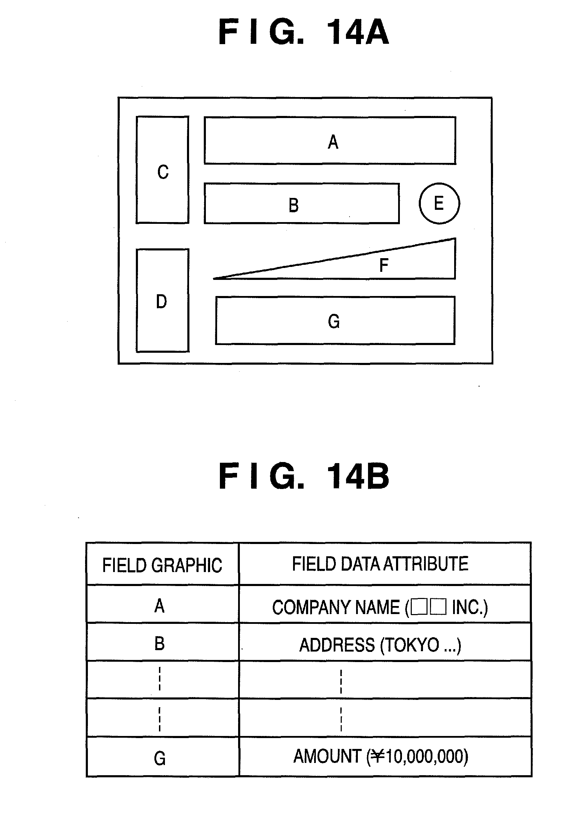

In step S103, the CPU 105 defines a form graphic (form pattern) based on an instruction from the form designer. Fig. 14A is a view illustrating a form graphic (form pattern). In Fig. 14A, a layout of field graphics A to G is defined as a form graphic (form pattern). The form information file 207 stores position information based on the form graphic layout defined in this step. A form graphic can be specified by designating position information in a form file.

In step S104, the CPU 105 defines each field data contained in the form pattern. Fig. 14B is a table showing a setting example of field data. Data of the text type, the numerical type, and the file type for flowing data from a file can be set in the field data attribute. In the setting example of Fig. 14B, text data "company name" is set in field graphic A; text data "address", in field graphic B; and numerical data "amount", in field graphic G. The field data file 303 stores field data defined in this step. By specifying a form graphic, corresponding field data can be specified.

In step S105, the CPU 105 associates the amendment information set in step S101 with the field graphic defined in step S104.

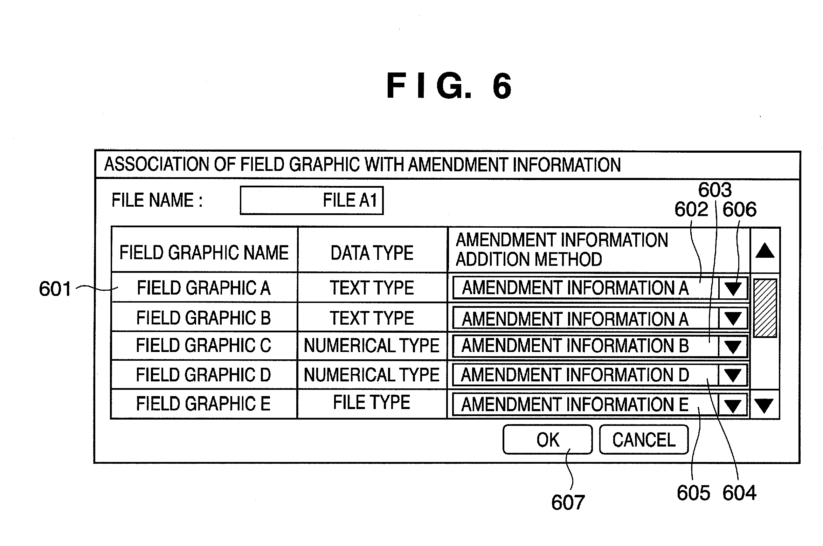

Fig. 6 is a table illustrating a setup window for associating amendment information with each field graphic displayed on the display apparatus 101.

Field graphic A 601 of the text data type is associated with amendment information A 602. The display control unit 203 and user interface 206 set the amendment information A 602, amendment information B 603, amendment information D 604, and amendment information E 605 via the setup windows in Figs. 5A and 5B under the overall control of the CPU 105. The form designer operates a pull-down operation button 606 in Fig. 6 to list amendment information A, B,..., E and select one of them. The form designer can set amendment information corresponding to each of field graphics A, B,..., E. When the form designer presses an OK button 607, association of field graphics having a file name "file A1" with amendment information ends.

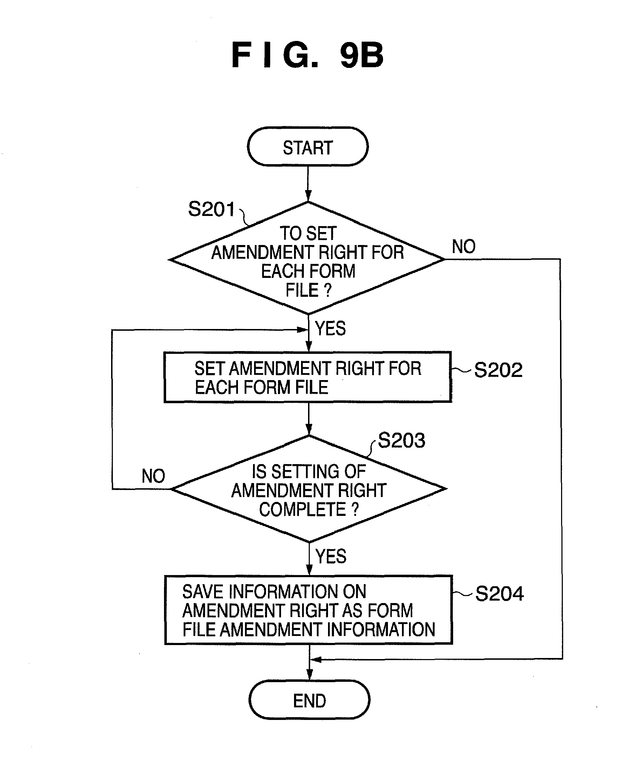

Referring back to step S105 in Fig. 9, after association of field graphics with amendment information ends, the process advances to step S106.

In step S106, the CPU 105 determines whether creation of the form file is complete. If the CPU 105 determines in step S106 that creation of the form file is not complete (NO in S106), the process returns to step S102 to repeat the same process up to step S105 until creation of the form file is complete. If the CPU 105 determines in step S106 that creation of the form file is complete (YES in S106), the process advances to step S107.

In step S107, the CPU 105 saves the form file name, the form graphic, and amendment information associated with field graphics in the form information file 207. The form editor can designate a form file name (e.g., "file A1") via the user interface 206 to read out a corresponding form graphic (form pattern) from the form information file 207.

If the CPU 105 determines in step S108 to successively create a form file (YES in S108), the process returns to step S102 to repeat the process up to step S107. If the CPU 105 determines in step S108 not to successively create a form file (NO in S108), the process ends.

### (Setting of Amendment Authorization)

A sequence to set a right to amend a form file will be explained with reference to Fig. 9B. The system administrator inputs a form file amendment right setting instruction from a management console 409 connected to the Web server 401. Then, an amendment information control unit 408 saves set contents in an amendment information file 407 under the overall control of the CPU 105.

In step S201, the CPU 105 determines whether the instruction from the system administrator is a form file amendment authorization setting instruction.

If the CPU 105 determines in step S201 that the instruction is not an amendment authorization setting instruction for each form file (NO in S201), the process ends. If the CPU 105 determines in step S201 that the instruction is an amendment authorization setting instruction for each form file (YES in S201), the process advances to step S202.

In step S202, the amendment information control unit 408 sets an amendment authorization for each form file under the control of the CPU 105. For example, the amendment authorization can be given to one or a plurality of users for one form file.

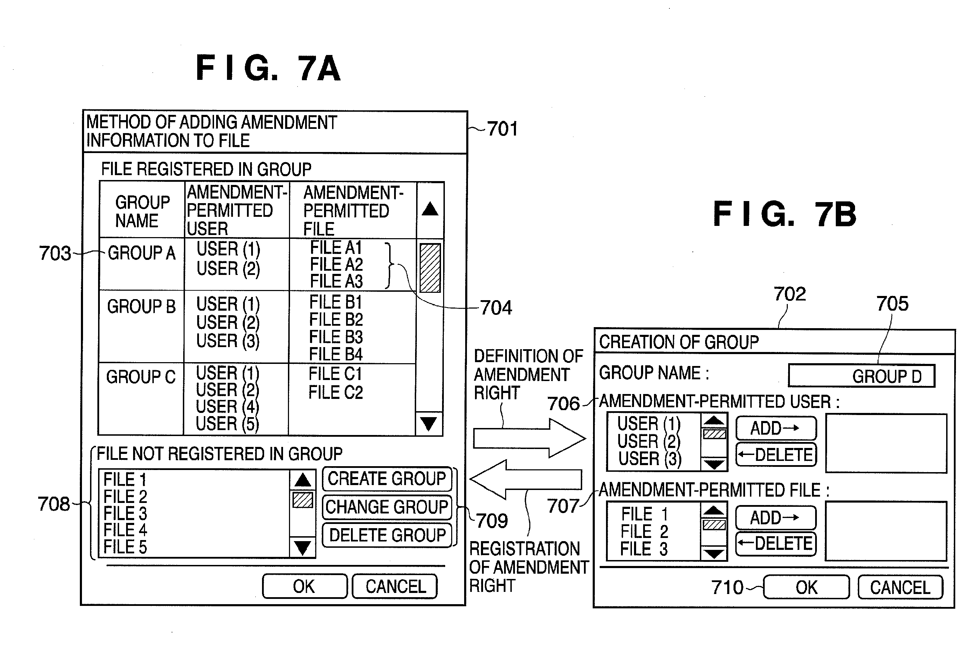

Figs. 7A and 7B are views each illustrating a setup window which is displayed by the operation of the display control unit 203 and user interface 206 under the overall control of the CPU 105 in order to set the form file amendment authorization. In a window 701 of Fig. 7A, amendment-permitted files A1 to A3 denoted by reference numeral 704 form a group A 703. In Fig. 7A, users (1) and (2) have the right to amend form files belonging to group A.

When an operation button (creation, change, and deletion of a group) 709 in Fig. 7A is operated, the display apparatus 101 displays a window corresponding to creation, change, or deletion of a group. A window 702 in Fig. 7B is an exemplary window display for creating a group. The window 702 allows setting a form file to be contained in a group, and setting a user to be given authorization to amend a form file belonging to the group. A user can be added or deleted by an operation (addition/deletion) to an amendment-permitted user setting field 706. A form file to be amended in a designated group (group D in the window 702 of Fig. 7B) can be added or deleted by an operation (addition/deletion) to a form file setting field 707. By pressing an OK button 710, the contents of a group are finalized and registered as the amendment right registration result in the window 701 of Fig. 7A.

The amendment authorization can be set for each form file via the windows in Figs. 7A and 7B. The amendment authorization can be set for each field data via the windows in Figs. 5A and 5B described above.

Referring back to step S202 in Fig. 9B, after setting of the amendment authorization for each form file ends, the process advances to step S203.

In step S203, the CPU 105 determines whether the amendment authorization setting process is complete. If the CPU 105 determines that the amendment authorization setting process is not complete (NO in S203), the process returns to step S202 to repetitively execute the same process. If the CPU 105 determines that setting of the amendment authorization is complete (YES in S203), the process advances to step S204.

In step S204, the amendment information control unit 408 saves information (form file amendment information) on the amendment authorization set for the form file in the amendment information file 407. Then, the process ends.

### (Process When Field Data Is Edited)

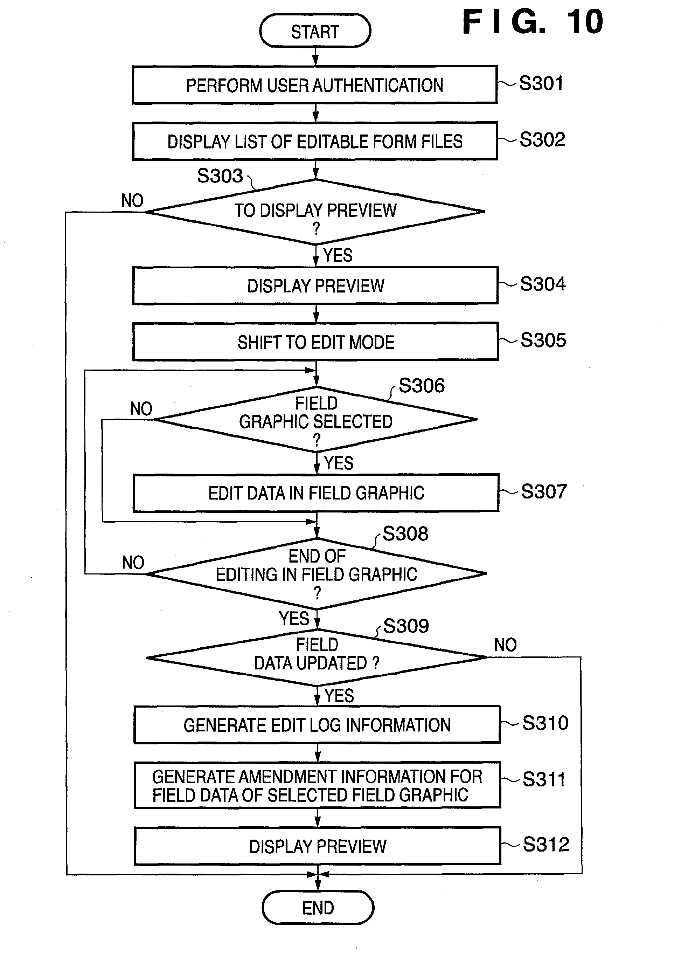

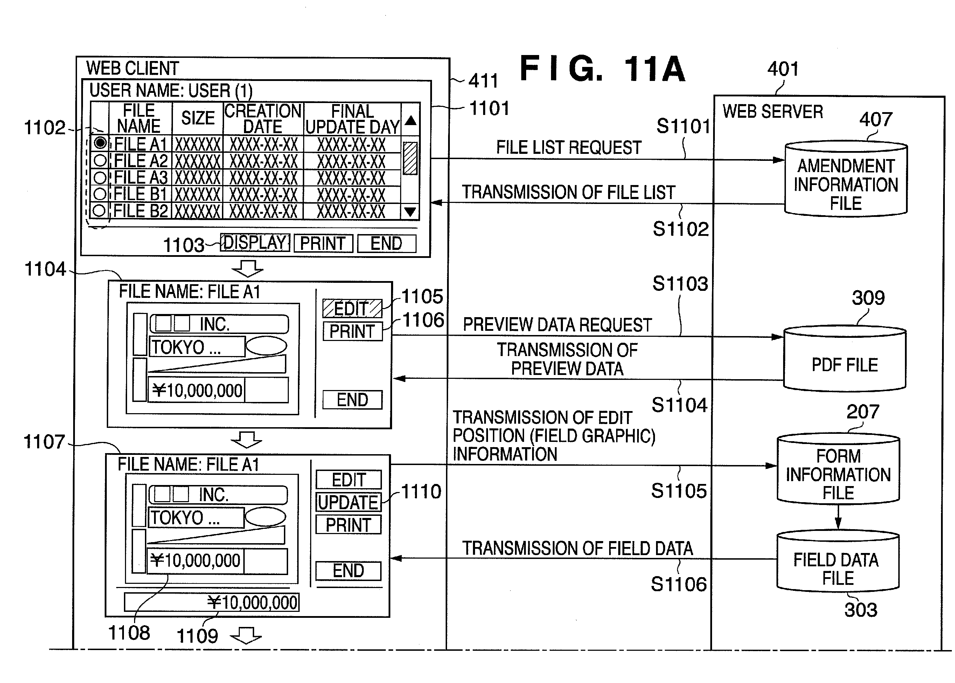

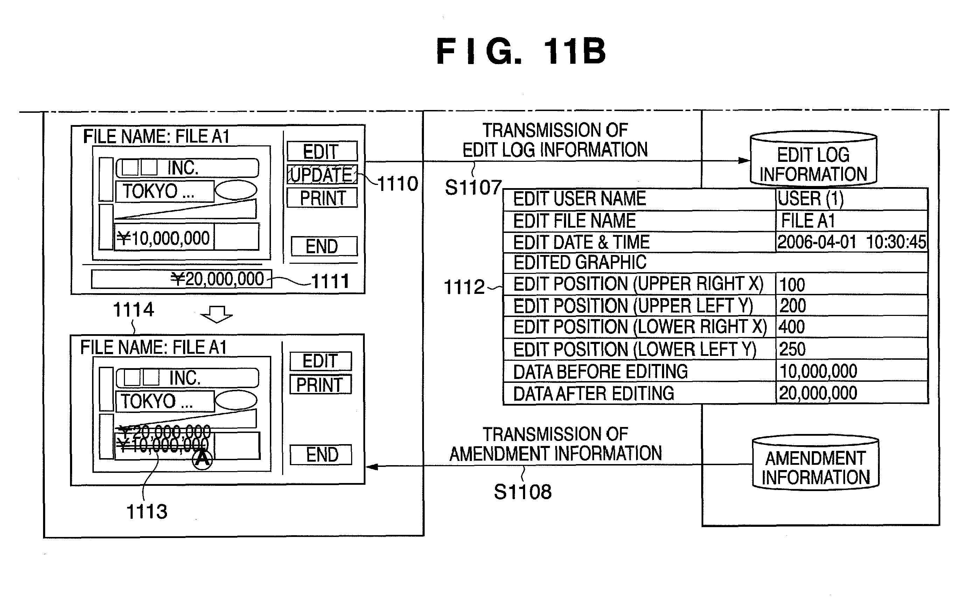

A process by the form information design module 201 when the form editor edits (amends) field data in an overlay-displayed form will be explained. Fig. 10 is a flowchart for explaining the sequence of an edit (amendment) process by the form information design module 201. Figs. 11A and 11B are a view for schematically explaining the sequence of communication between the Web client 411 and the Web server 401.

In step S301, the Web client 411 authenticates a form editor. After user authentication, the process advances to step S302, and the Web client 411 requests a list of files editable (amendable) by the form editor to the Web server 401. This process corresponds to step S1101 in Fig. 11A. The amendment information control unit 408 generates information (form file list) on a user permitted to edit (amend) a form file, and transmits it to the Web client 411 via the network communication control unit 406. This process corresponds to step S1102 in Fig. 11A.

In step S302, upon receiving the file list, the display control unit 413 of the Web client 411 displays, on the display apparatus, a list of form files which the authenticated user (form editor) is permitted to amend. The display control unit 413 displays the list as represented by a display window 1101 in Fig. 11A. The authenticated form editor can select one of selection buttons 1102 in the display window 1101 to select a form file to be edited (amended).

In step S303, if the form editor determines not to preview the form file (NO in S303), the process ends. If the form editor determines in step S303 to preview the form file (YES in S303), the process advances to step S304.

In step S304, the Web client 411 requests data (preview data) for previewing the selected form file to the Web server 401. This process corresponds to step S1103 in Fig. 11A. The distribution data control unit 404 of the Web server 401 reads out the data (preview data) of the form file to be edited (amended) from the PDF file 309, and stores it in the distribution data storage unit 405. The distribution data control unit 404 transmits the data (preview data) stored in the distribution data storage unit 405 to the Web client 411 via the network communication control unit 406. This process corresponds to step S1104 in Fig. 11A.

The display control unit 413 of the Web client 411 displays the received preview data on the display apparatus. A display window 1104 in Fig. 11A is an exemplary preview display window having a file name "form file A1" selected in the display window 1101. If the form editor presses a print button 1106 in this window, the contents of form file A1 are output to the printer 110 via the input/output control unit 109. If the form editor presses an edit button 1105, the process shifts to an edit mode in step S305.

In S305, if the form editor selects a field graphic 1108 as an edit (amendment) target (YES in S306), the Web client 411 transmits information on the selected edit position (field graphic). This process corresponds to S1105 in Fig. 11A.

If the form editor does not select any field graphic in step S306 (NO in S306), the process advances to step S308.

Upon receiving the edit position (field graphic) information, the distribution data control unit 404 of the Web server 401 refers to the form information file 207 to specify a field graphic based on edit position information designated in the form file. The distribution data control unit 404 reads out, from the form information file 207, information on a user having the authentication authorization to edit (amend) the specified field graphic. Then, the distribution data control unit 404 stores the user information in the form information storage unit 402. The distribution data control unit 404 determines whether the form editor has the authentication authorization to edit the specified field graphic. If the form editor does not have the authentication authorization, the distribution data control unit 404 can cause the Web client 411 to display an error message. If the form editor has the authentication authorization, the distribution data control unit 404 refers to the field data file 303 to specify field data corresponding to the specified form graphic. The distribution data control unit 404 transmits the field data to the Web client 411. This process corresponds to S1106 in Fig. 11A.

Upon receiving the field data, the display control unit 413 of the Web client 411 displays the field data (amount of 10,000.000) in an edit field 1109 of the window 1107. The display control unit 413 additionally displays an "update" button in the window 1107 of the display apparatus in order to execute editing (amendment) of the field data.

In step S307, the form editor amends the display in the edit field 1109 of the window 1107. In step S308, the CPU 105 determines whether to end editing in the field graphic. If another field graphic is to be edited (amended) or editing (amendment) of field data in a selected field graphic continues (NO in S308), the process returns to step S306. The processes in steps S306 and S307 are similarly repeated until the end of editing (amendment).

If the CPU 105 determines in step S308 that the form editor has pressed an update button 1110, it determines that editing (amendment) of the field data ends (YES in S308), and the process advances to step S309.

In S309, the CPU 105 compares the field data received from the Web server 401 with the field data set in the edit field 1109. If the CPU 105 determines in step S309 that the field data received from the Web server 401 is identical to that set in the edit field 1109 (NO in S309), the process ends.

If the CPU 105 determines in step S309 that these two field data are different, it determines that the field data has been updated (YES in S309). Then, the process advances to step S310.

In step S310, the CPU of the Web client 411 generates edit log information of data representing edit (amendment) work by the form editor. In Fig. 11B, reference numeral 1112 denotes exemplary contents of the edit log information. "User (1)" is recorded as a form editor, and a form file name "file A1" to be edited (amended) is recorded. The edit log information further records the edit date & time, position coordinate information (edit position information) for specifying a form graphic, data before editing (amendment), and data after editing (amendment).

When a plurality of form graphics are selected, the CPU of the Web client 411 generates edit log information corresponding to the selected form graphics.

The CPU of the Web client 411 transmits the generated edit log information (reference numeral 1112 in Fig. 11B) to the Web server 401. This process corresponds to step S1107 in Fig. 11B.

In S311, the distribution data control unit 404 generates amendment information for field data of the selected field graphic based on edit position information, edited data, and amendment information (edit information) stored in the form information file 207.

The Web server 401 can store the edit log information received from the Web client 411 in the amendment information file 407 via the amendment information control unit 408. The distribution data control unit 404 can refer to the edit log information via the amendment information control unit 408. The distribution data control unit 404 extracts position coordinate information (edit position information) and edited (amended) data from the edit log information, and stores them in the form information storage unit 402. The distribution data control unit 404 specifies a field graphic based on the position coordinate information (edit position information). The distribution data control unit 404 reads out amendment information associated with the field graphic from the form information file 207, and stores it in the form information storage unit 402.

The distribution data control unit 404 generates amendment information for the selected field graphic based on the position coordinate information (edit position information), the edited (amended) data, and the amendment information associated with the field graphic. The amendment information for the selected field graphic reflects settings such as the type of amendment information and the display method after amendment which are set in Fig. 5B.

The distribution data control unit 404 transmits the amendment information for the selected field graphic to the Web client 411.

In step S312, based on the amendment information received from the Web server 401 for the selected field graphic, the display control unit 413 displays, on the display apparatus, a preview display reflecting the amendment information. A window 1114 in Fig. 11B is an exemplary preview display reflecting amendment information. Field data (amount display) before editing (amendment) in a selected field graphic is canceled with a double line. Field data (amount display) after editing (amendment) is displayed in combination with the data before editing (amendment), and an imprint is displayed at a lower right position in the field graphic.

By the above-described process, the process when overlay-displayed field data is amended in the information processing apparatus ends.

The embodiment according to the present invention can uniformly manage editing of overlay-displayed field data.

### (Case Where Field Data Is Extracted from Printed Material)

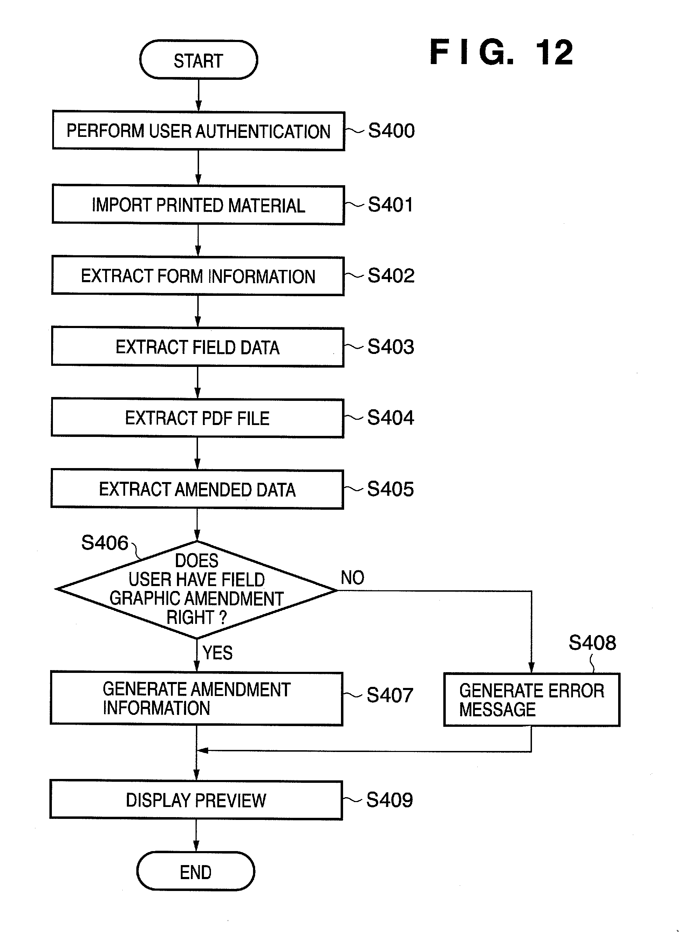

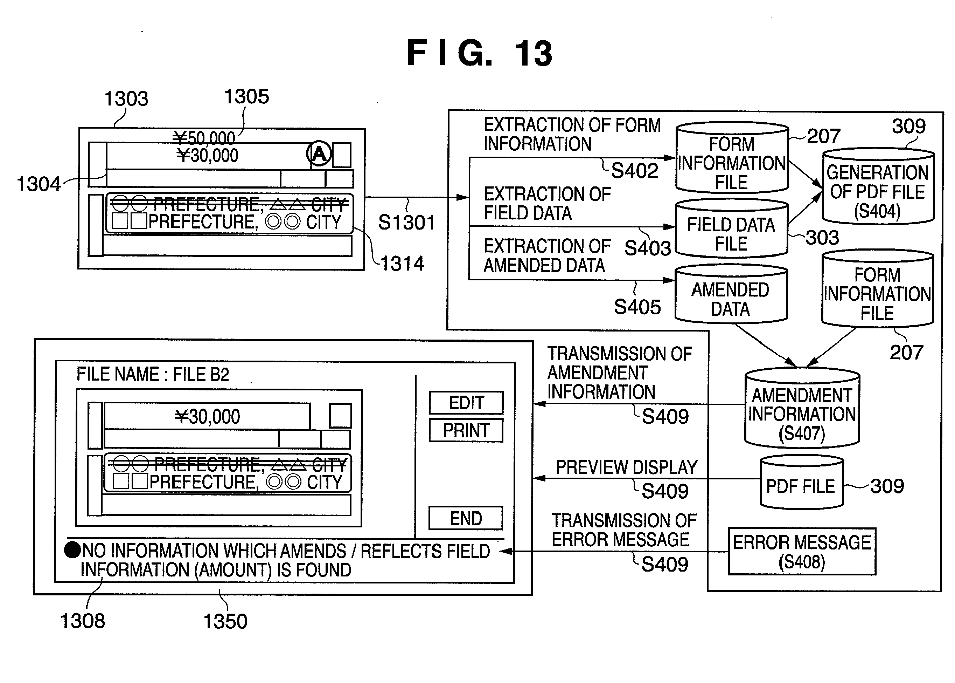

The sequence of an edit (amendment) process when a material printed on a print medium is edited (amended) will be explained with reference to Figs. 12 and 13.

In step S400, the CPU of the Web client 411 authenticates a form editor. After user authentication, the process advances to step S401.

In step S401, the CPU of the Web client 411 imports a printed material via an image reading apparatus such as a scanner. The CPU of the Web client 411 reads, as image data, a material 1303 in Fig. 13 which is printed on a print medium and undergoes an arbitrary amendment. The CPU of the Web client 411 transmits the read image data to the Web server 401. This process corresponds to step S1301 in Fig. 13. The CPU of the Web client 411 transmits information on the user authenticated in step S400 to the Web server 401.

In step S402, the distribution data control unit 404 of the Web server 401 extracts information (form information) on the form graphic layout from the received image data. The distribution data control unit 404 of the Web server 401 stores form information of the image data in the form information file 207 based on the extraction result. The distribution data control unit 404 of the Web server 401 stores user information transmitted from the Web client 411 in the form information storage unit 402.

In step S403, the distribution data control unit 404 of the Web server 401 extracts field data of each form graphic from the received image data, and stores it in the field data file 303.

In S404, the overlay printing control unit 305 of the Web server 401 reads out the form information and field data from the form information file 207 and field data file via the file input/output unit 302. The overlay printing control unit 305 controls the PDF driver 308 to generate a PDF file 309 based on the readout form information and field data. Overlay printing is possible on the basis of the generated PDF file 309, and the PDF file 309 can be utilized for a preview display before executing printing.

In step S405, the amendment information control unit 408 of the Web server 401 extracts amended data of the amended field graphic from the image data. In the case of Fig. 13, the amendment information control unit 408 extracts an amendment to the amount described in a field graphic 1304 and an amendment to the address described in a field graphic 1314.

In step S405, the distribution data control unit 404 reads out, from the form information file 207, information on a user having the authentication right to edit (amend) the amended field graphic. Then, the distribution data control unit 404 stores the user information in the form information storage unit 402. The distribution data control unit 404 determines whether the form editor whose information has been stored in the form information storage unit 402 in S402 is a user having the authentication authorization to edit (amend) the amended field graphic.

If the distribution data control unit 404 determines in step S406 that the form editor has the field graphic amendment authorization (YES in S406), the process advances to step S407. If there are a plurality of amended field graphics, the distribution data control unit 404 determines whether the form editor has the authentication authorization for each field graphic.

In step S407, the distribution data control unit 404 generates amendment information for the amended field graphic based on the amended data extracted in step S405 and the amendment information stored in the form information file 207.

If the distribution data control unit 404 determines in step S406 that the form editor does not have the amendment authorization (NO in S406), the distribution data control unit 404 generates an error message in step S408 to notify the form editor that he does not have the amendment authorization.

In step S409, the display control unit 413 of the Web client 411 displays a preview based on the PDF file 309, amendment information, and error message which are transmitted from the Web server 401.

The overlay printing control unit 305 of the Web server 401 transmits the PDF file 309 generated in step S404 to the Web client 411 for a preview. The distribution data control unit 404 of the Web server 401 transmits, to the Web client 411, the amendment information generated in step S407 for the amended field graphic. If an error message is generated in step S408, the distribution data control unit 404 transmits it to the Web client 411.

When the Web client 411 receives the PDF file 309, the amendment information for the amended field graphic, and the error message, the display control unit 413 displays a preview based on these pieces of information. A window 1350 in Fig. 13 is an exemplary preview display by the display control unit 413.

When the field graphic 1304 is amended but the form editor does not have the authorization to amend the field graphic 1304, an amendment 1305 is not displayed in the preview display. As for the field graphic 1304 for which the form editor does not have any amendment authorization, for example, an error message 1308 is displayed in the window 1350.

When the form editor has the amendment authorization to the amended field graphic 1304, amendment contents on the print medium are reflected in the window 1350.

The embodiment can uniformly manage amendment to overlay-displayed field data.

Amendment management functions to generate and display amendment information for a form amendment without the mediacy of any user interface can also be provided in the library format from the overlay printing control unit 305.

The amendment management functions to generate and display amendment information can be installed in an information processing apparatus, or can also be mounted in, for example, the printer 110. In this case, the editor can execute the amendment management functions before executing the overlay printing process. The form editor can uniformly manage amendment to overlay-displayed field data by executing these amendment management functions before executing the overlay printing process. The use of the amendment management functions can reduce the amendment load related to generation and display settings of amendment information corresponding to a form amendment.

### (Other Embodiments)

The object of the present invention is also achieved by supplying a storage medium which stores software program codes for implementing the functions of the above-described embodiment to a system or apparatus. The object of the present invention is also achieved by reading out and executing the program codes stored in the storage medium by the computer (or the CPU or MPU) of the system or apparatus.

In this case, the program codes read out from the storage medium implement the functions of the above-described embodiment, and the storage medium which stores the program codes constitutes the present invention.

The storage medium for supplying the program codes includes a flexible disk, hard disk, optical disk, magneto optical disk, CD-ROM, CD-R, nonvolatile memory card, and ROM.

The functions of the above-described embodiment are implemented by executing the readout program codes by the computer. Also, the present invention includes a case where an OS (Operating System) or the like running on the computer performs some or all of actual processes based on the instructions of the program codes and thereby implements the functions of the above-described embodiment.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
An information processing apparatus which manages amendment to overlay-displayed field data includes setting means (201) which sets, for each of the field data, amendment information for defining display of an amendment result to field data of a form file, and display control means (203) which controls displaying of the amendment result to selected field data based on data obtained by editing the selected field data and the amendment information corresponding to the selected field data set by the setting means (201).

## Claims

1. An information processing apparatus which manages amendment to overlay-displayed field data, **characterized by** comprising:
setting means (201) configured to set, for each of the field data, amendment information for defining display of an amendment result to field data of a form file; and
display control means (203) configured to control displaying of the amendment result to selected field data on the basis of data obtained by editing the selected field data and the amendment information corresponding to the selected field data set by said setting means(201).

2. The apparatus according to claim 1, further **characterized by** comprising form file list generation means (408) configured to generate a list of form files amendable by an authenticated user,
wherein said display control means (203) controls the displaying of an amendment result to field data of a form file selected from the form file list.

3. The apparatus according to claim 1, wherein the amendment information contains authentication information for giving an amendment right to the field data.

4. The apparatus according to claim 1, wherein said display control means (203) determines, on the basis of authentication information of a user given for editing, whether or not the editing to the selected field data is permitted.

5. An information processing method for an information processing apparatus which manages amendment to overlay-displayed field data, **characterized by** comprising:
a setting step (S101) of causing setting means (201) to set, for each of the field data, amendment information for defining display of an amendment result to field data of a form file; and
a display control step (S312) of causing display control means (203) to control displaying of the amendment result to selected field data on the basis of data obtained by editing the selected field data and the amendment information corresponding to the selected field data set in the setting step (S101).

6. The method according to claim 5, further **characterized by** comprising a form file list generation step (S302) of causing form file list generation means (408) to generate a list of form files amendable by an authenticated user,
wherein in the display control step (S312), the displaying of an amendment result to field data of a form file selected from the form file list is controlled.

7. The method according to claim 5, wherein the amendment information contains authentication information for giving an amendment right to the field data.

8. The method according to claim 5, wherein in the display control step (S312), it is determined whether or not the editing to the selected field data is permitted on the basis of authentication information of a user given for the editing.

9. A program which is stored in a computer-readable storage medium to cause a computer to execute an information processing method defined in claim 5.

10. A computer-readable storage medium which stores a program defined in claim 9.
